Europäisches Patentamt

European Patent Office

Office européen des brevets

(19)

(11) Veröffentlichungsnummer: **0 097 967**
A2

(12) # EUROPÄISCHE PATENTANMELDUNG

(21) Anmeldenummer: 83106344.1

(22) Anmeldetag: 29.06.83

(51) Int. Cl.³: **H 02 K 3/52**
H 02 K 5/22, H 01 F 5/04

(30) Priorität: 30.06.82 DE 3224466
26.08.82 DE 3231887

(43) Veröffentlichungstag der Anmeldung:
11.01.84 Patentblatt 84/2

(84) Benannte Vertragsstaaten:
CH DE FR IT LI NL

(71) Anmelder: SIEMENS AKTIENGESELLSCHAFT
Berlin und München Wittelsbacherplatz 2
D-8000 München 2(DE)

(72) Erfinder: Schmidt, Helmut
Unterer Weinberg 44
D-8701 Reichenberg(DE)

(72) Erfinder: Höchamer, Horst
Schlosstrasse 8
D-8531 Sugenheim(DE)

(54) **Spulenkörper und Verfahren zu dessen Herstellung.**

(57) Die Erfindung bezieht sich auf einen Spulenkörper (3) aus Isolierstoff mit einem in axialer Richtung durch je einen Stirnflansch (31 bzw. 32) begrenzten Wickelkern (33) und an einem Stirnflansch (31) gehalterten Anschlußteilen (4 bzw. 5) für die äußeren Anschlußleitungen (6 bzw. 7) mit zumindest jeweils einem aus der Stirnflanschebene vorstehenden, jeweils mit dem Wicklungsanfang (21) bzw. dem Wicklungsende (22) der Spule (2) zu verbindenden und anschließend in die Stirnflanschebene umlegbaren Kontaktende (41 bzw. 51); zur fertigungs- und montagetechnisch vereinfachten Kontaktierung zwischen den Wicklungsenden einerseits und den äußeren Anschlußleitungen andererseits bei möglichst kleinem Einbauraum wird erfindungsgemäß vorgeschlagen, daß die äußeren Anschlußleitungen (6 bzw. 7) in Leitungskanälen (34 bzw. 35) in dem einen Stirnflansch (31) zu einem Kontaktende (41 bzw. 51) zugentlastet verlegt und mit ihrem abisolierten Ende (61 bzw. 71) an diesem Kontaktende (41 bzw. 51) fest angeschlossen sind.

Eine Anwendung eignet sich insbesondere für Ständer-Erregerspulen von Synchron-Kleinmotoren.

FIG 1

0097967

SIEMENS AKTIENGESELLSCHAFT      Unser Zeichen
Berlin und München              VPA 82 P 3187 E

## Spulenkörper und Verfahren zu dessen Herstellung

Die Erfindung bezieht sich auf einen Spulenkörper aus Isolierstoff für elektrische Spulen gemäß Oberbegriff des Patentanspruchs 1 und auf ein Verfahren zu dessen Herstellung; ein derartiger Spulenkörper ist aus der DE-AS 15 64 607 bekannt.

Bei dem bekannten Spulenkörper aus Isolierstoff für elektrische Spulen sind entweder auf beide Stirnflansche verteilt oder konzentriert an einer Stelle des einen Stirnflansches Lötanschlüsse sowohl für den Wicklungsanfang als auch für das Wicklungsende der auf den Spulenkörper gewickelten Spule formschlüssig gehaltert; die Lötanschlüsse sind jeweils mit einem in Richtung auf den angelöteten Wicklungsanfang bzw. das angelötete Wicklungsende umbiegbaren Ansatz versehen. Der Wicklungsanfang und das Wicklungsende sind durch randoffene Kanäle im Stirnflansch des Spulenkörpers vom Wickelraum der Spule her zu den Lötanschlüssen herausgeführt. Zur Kontaktierung mit den äußeren Anschlußleitungen ist jeweils jeder Lötanschluß zusätzlich als Steckkontaktglied ausgebildet, derart daß die mit entsprechenden Gegenkontaktsteckgliedern versehenen äußeren Anschlußleitungen auf die Steckkontaktglieder aufschiebbar sind.

Bk 2 Bih / 19.08.1982

Aufgabe der vorliegenden Erfindung ist die fertigungs- und montagetechnisch vereinfachte, auch von Maschinenautomaten zu bewerkstelligende, sichere Kontaktierung zwischen dem Wicklungsanfang bzw. dem Wicklungsende der auf den Spulenkörper gewickelten Spule einerseits und den äußeren Anschlußleitungen andererseits bei, insbesondere zur Verwendung für in Gehäuse von Synchron-Kleinmotoren einzusetzenden Ständer-Erregerspulen vorteilhaftem, minimalem axialen Platzbedarf.

Die Aufgabe wird bei einem Spulenkörper der eingangs genannten Art auf einfache Weise erfindungsgemäß durch die kennzeichnende Lehre des Patentanspruchs 1 gelöst. Ein vorteilhaftes Verfahren zur Herstellung eines solchen Spulenkörpers vermittelt die Lehre des Anspruchs 10. Vorteilhafte Ausgestaltungen der Erfindung sind jeweils Gegenstand der Unteransprüche 2 bis 9.

Der erfindungsgemäße Spulenkörper erlaubt in einfacher Weise die vollmaschinelle Bewicklung des Spulenkörpers mit hoher Wicklungsgeschwindigkeit, Fixierung bzw. gegenseitige Kontaktierung des Wicklungsanfangs und des Wicklungsendes der Spule mit den äußeren Anschlußleitungen für die Spule; der fertige mit den angeschlossenen äußeren Anschlußleitungen versehene Spulenkörper kann dann als Fertig-Bauteil in das Gehäuse, z.B. eines Wechselstrom-Kleinmotors, insbesondere Synchron-Kleinmotors oder Klauenpolmotors, eingesetzt werden, wobei zweckmäßigerweise ein an den Spulenkörper jeweils angeformter radialer überstehender Kabeleinführungsschacht in eine entsprechende Gehäuseöffnung eingesteckt ist und gleichzeitig der Fixierung der Anschlußleitungen und deren isolierten Herausführung aus dem Gehäuse dient.

Um sowohl den Spulenkörper auf einfache Weise herstellen als auch bei der Montage die äußeren Anschlußleitungen an dem mit den Anschlußteilen versehenden Stirnflansch fixieren zu können, ist vorgesehen, daß die äußeren Anschlußleitungen in stirnseitig offenen Leitungskanälen eingelegt und gehalten sind.

Zur Halterung kann ein kraftschlüssiges Festklemmen der Anschlußleitungen in entsprechend mit Untermaßweite hergestellten Leitungskanälen oder ein formschlüssiges Festlegen mittels an den Seitenwänden der ansonsten stirnseitig offenen Leitungskanälen angeformten, die offene Seite zumindest teilweise überdeckenden Nasen vorgesehen sein. Im Bereich der überschnittenen Nasen ist zweckmäßigerweise die Wandung des Spulenkörpers dünner gestaltet, derart daß dieser Wandteil bei der Spritzgußherstellung des Isolierstoff-Spulenkörpers in der Spritzform bei zweistufiger Entformung seitlich wegfedern kann.

Anstelle der ursprünglich beim Spritzgießen des Spulenkörpers mit angeformten hinterschnittenen Nasen ist nach einer weiteren Ausgestaltung der Erfindung vorgesehen, daß die äußeren Anschlußleitungen in den ansonsten stirnseitig offenen Leitungskanälen durch zumindest teilweise nachträgliches Verformen der Seitenwände der Leitungskanäle, z.B. durch Heißverstemmen des Spulenkörpers formschlüssig gehalten sind.

Zweckmäßigerweise wird eine Kombination derart vorgesehen, daß die äußeren Anschlußleitungen im Bereich des Kabeleinführungsschachtes durch nachträgliches Heißverstemmen des Spulenkörpers und im übrigen Bereich der Leitungskanäle durch Eindrücken hinter die hinterschnittenen Nasen fixiert werden.

Die Erfindung sowie weitere vorteilhafte Ausgestaltungen der Erfindung werden im folgenden anhand schematisch darge- stellter Ausführungsbeispiele in der Zeichnung näher erläutert. Darin zeigen:

Fig. 1 eine stirnseitige Draufsicht auf einen mit Anschlußteilen versehenen Spulenkörper,

Fig. 2 einen axialen Längsschnitt durch den Spulenkörper aus Fig. 1 gemäß der Schnittlinie II-II,

Fig. 3 ein Teilschnittbild des Spulenkörpers nach Fig. 1 im Bereich des linken Anschlußteils gemäß Schnittverlauf III-III,

Fig. 4 ein Teilschnittbild des Spulenkörpers nach Fig. 1 im Bereich des linken Anschlußteils gemäß Schnittverlauf IV-IV,

Fig. 5 in einem axialen Teillängsschnittbild einen kompletten Snychron-Kleinmotor in Klauenpolart mit eingesetztem Spulenkörper gemäß Fig. 1,

Fig. 6 den Spulenkörper gemäß Fig. 1 mit stirnseitig isolierten Anschlußteilen und angedeuteter Anordnung einer Kurzschlußbrille relativ zu den Anschlußteilen des Spulenkörpers.

Der in den Ausführungsbeispielen gezeigte Spulenkörper 3 aus Isolierstoff weist einen in axialer Richtung durch Stirnflansche 31, 32 begrenzten Wickelkern 33 auf, auf den eine Spule 2 aufgewickelt ist. An dem einen Stirnflansch 31 sind an dessen Vorderseite jeweils links und rechts gegenüber- liegend je ein Anschlußteil 4, 5 gehaltert. Zur Befestigung der Anschlußteile 4, 5 können diese z.B. mit einem ersten Halterungsteil 42, 52 in angepaßte eingeformte Vertiefungen des Spulenkörpers 3 ein- und durch Verschweißen, insbesondere Heißverstemmen, des Spulenkörpers formschlüssig festgelegt werden. Zur Kontaktierung der Anschlußteile 4, 5 mit dem Wicklungsanfang 21 und der einen äußeren Anschlußleitung 6 bzw. dem Wicklungsende 22 der Spule 2 und der anderen

0097967

äußeren Anschlußleitung 7 weisen die Anschlußteile 6, 7 außerdem jeweils ein weiteres zunächst aus der Stirnflanschebene axial vorstehendes und nach der Kontaktierung in die Stirnflanschebene zurück umlegbares freies Kontaktende 41; 51 auf.

Bei der Herstellung der auf den Wickelkern 33 des Spulenkörpers 3 aufzuwickelnden Spule 2 wird in zweckmäßiger Weise von der Wickelvorrichtung zunächst der Wickelanfang 21 der Spule 2 mittels entsprechend bewegter Wickeldüse um das axial vorstehende Kontaktende 41 des Anschlußteils 4 gewickelt, anschließend bewegt sich die Wickeldüse der Wickelvorrichtung in eine Stellung radial oberhalb des Spulenkörpers 3, so daß durch hochtouriges Rotieren des Spulenkörpers 3 der aus der nunmehr stillstehenden Wickeldüse angelieferte Wicklungsdraht auf den Wickelkern 33 aufgewickelt werden kann. Nach dem Wickeln der Spule 3 wird das Wicklungsende 22 nach Schwenken der Wickeldüse um das ebenfalls zunächst axial vorstehende freie Kontaktende 51 des anderen Anschlußteils 5 geführt und um das Kontaktende 51 durch entsprechende Bewegung der Wickeldüse bei nunmehr ruhendem Spulenkörper 3 gewickelt.

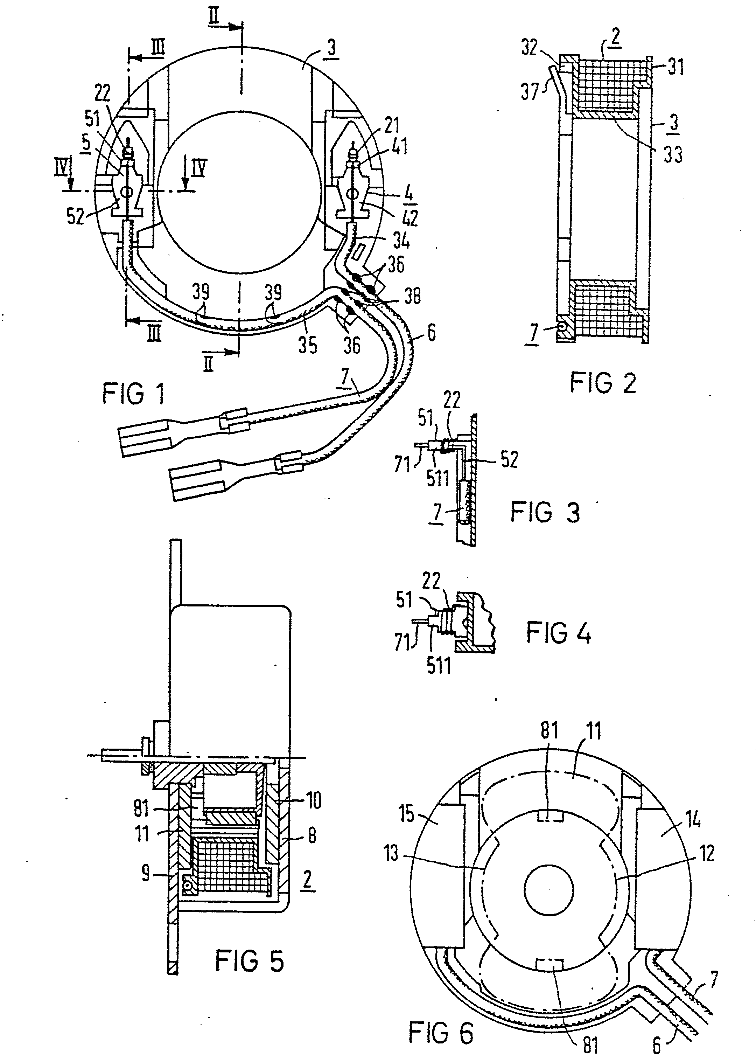

Die äußeren Anschlußleitungen 6,7 sind im Bereich des einen Stirnflansches 31 des Spulenkörpers 3 in ansonsten stirnseitig offenen, in den Stirnflansch eingeformten Leitungskanälen 34, 35 verlegt und mit ihren abisolierten freien Enden 61;71 zu den hochgebogenen Kontaktenden 41, 51 der Anschlußteile 4, 5 hingeführt. Der Einführung der äußeren Anschlußleitungen 6, 7 in den Spulenkörper 3 dient ein einstückig angeformter, radial über den äußeren Rand des Spulenkörpers 3 überstehender Kabeleinführungsschacht 38. Wie insbes. aus Fig. 1 ersichtlich, ist die Führung der Anschlußleitung in dem Kabeleinführungsschacht zu der Führung in den übrigen Leitungs-

tungskanälen des Stirnflansches 31 derart abgewinkelt, daß die zu kontaktierenden freien Enden der Anschlußleitungen 6, 7 im Stirnflansch 31 zugentlastet gehalten sind.

Zur Fixierung der Anschlußleitungen 6, 7 in den Leitungskanälen 34, 35 kann ein kraftschlüssiges Eindrücken oder ein formschlüssiges Halten vorgesehen werden. Ein formschlüssiges Halten erfolgt in vorteilhafter Weise im Bereich des Kabeleinführungsschachtes 38 durch Heißverstemmen (Verstemmpunkte 36) der Seitenwände der Leitungskanäle über die verlegten äußeren Anschlußleitungen und im übrigen Bereich des Stirnflansches mittels hinterschnittener Nasen 39, die dort an die Seitenwände der ansonsten stirnseitig offenen Leitungskanäle angeformt sind und hinter die die Anschlußleitungen einschnappbar formschlüssig verlegt und fixiert werden können.

Zur Befestigung der abisolierten freien Enden 61; 71 der äußeren Anschlußleitungen 6, 7 an den Kontaktenden 41; 51 sind diese in vorteilhafter Weise mit Klemmen 411, 511 versehen; in dies Klemmen 411; 511 sind nach einer Ausgestaltung der Erfindung die abisolierten freien Enden 61; 71 nach dem Umwickeln der Kontaktenden 41, 51 mit dem Wicklungsanfang 21 bzw. dem Wicklungsende 22 der Spule 2 eingelegt und anschließend durch Vercrimpen festgeklemmt.

Die derart sowohl mit Anfang und Ende der Wickung als auch mit deren äußeren Anschlußleitungen verbundenen, noch axial vorstehenden Kontaktenden 41, 51 können dann in besonders einfacher Weise durch entsprechende Handhabung des Spulenkörpers in einem Arbeitsgang in ein Lötbad getaucht werden; anschließend werden die freien Kontaktenden 41; 51 zur Erzielung eines möglichst geringen axialen Einbauraums in die Stirnflanschebene zurückgebogen.

Fig. 5 zeigt in einem axialen Teilschnittbild einen kompletten Synchron-Kleinmotor. Der Stator des dargestellten Synchron-Kleinmotors weist einen topfförmigen Gehäuseteil 8 und einen diesen abschließenden Gehäusedeckel 9 auf, der z.B. durch randseitiges Verstemmen mit dem topfförmigen Gehäuseteil 8 fest verbunden ist. Im Gehäusedeckel 9 ist ein Lager befestigt, in dem die Welle des dauermagneterregten Läufers gelagert ist.

Sowohl der Bodenteil des topfförmigen Gehäuseteiles 8 als auch der Gehäusedeckel übernehmen gleichzeitig die Funktion von Polplatten; dazu weisen beide Teile axial vorstehende über den Umfang jeweils verteilte und von dem Spulenkörper 3 mit der angeschlossenen Spule 2 konzentrisch umgebene Polzungen 81 auf. Ein erster Teil der am Umfang verteilten Polzungen 81 haben die Funktion von Hauptpolen, ein zweiter Teil die Funktion von Hilfspolen; die Hilfspol-Polzungen jeden Gehäuseteils sind durch Öffnungen von je einer Kurzschlußbrille 10, 11 durchgesteckt und zu ihrer Fixierung z.B. mit dieser verstemmt.

Fig. 6 zeigt den komplettierten, bei der Montage des Synchron-Kleinmotors z.B. im topfförmigen Gehäuseteil 8 einzulegenden Spulenkörpers in seiner örtlichen Zuordnung zu der einen, im wesentluchen länglich geformten Kurzschlußbrille; erfindungsgemäß ist zur weiteren Verringerung der axialen Bauhöhe dazu vorgesehen, daß die – in Bild 6 in vorteilhafter Weise durch je eine Isolier-Klebefolie 14; 15 abgedeckten – Anschlußteile 4, 5 in dem freien Raum zwischen den Längsseiten 12, 13 der entsprechenden Kurzschlußbrille 11 und dem Außenrand des Spulenkörpers 3 angeordnet sind.

Wie aus Fig. 2 ersichtlich, ist in vorteilhafter Weise weiterhin vorgesehen, daß das Anschlußteil 4 für den Wicklungsanfang 21 einerseis und das Anschlußteil 5 für das Wicklungsende 22 andererseits auf einander gegenüberliegenden Seiten eines Stirnflansches 3 angeordnet sind; diese Maßnahme gewährleistet ohne Inanspruchnahme eines zusätzlichen axialen Einbauraums eine einfache und trotzdem voll wirksame Fixierung des Spulenkörpers 3 beim gegenseitigen Befestigen des topfförmigen Gehäuseteils 8 mit eingelegtem Spulenkörper 3 und des Gehäusedeckels 9.

6 Figuren
10 Patentansprüche

Patentansprüche

1. Spulenkörper aus Isolierstoff für elektrische Spulen, insbesondere Ständer-Erregerspulen von Synchron-Kleinmotoren, mit einem in axialer Richtung durch je einen Stirnflansch begrenzenten Wickelkern, an einem Stirnflansch gehalterten Anschlußteilen für die äußeren Anschlußleitungen der elektrischen Spule mit zumindest jeweils einem aus der Stirnflanschebene vorstehenden, jeweils mit dem Wicklungsanfang bzw. dem Wicklungsende der Spule zu verbindenen und anschließend in die Stirnflanschebene umlegbaren Kontaktende sowie mit in den Stirnflansch eingeformten, zu den Anschlußteilen führenden Leitungskanälen, d a d u r c h   g e k e n n - z e i c h n e t ,   daß die Anschlußteile (4 bzw. 5) mit dem Kontaktende (41 bzw. 51) für den Wicklungsanfang (21) bzw. das Wicklungsende (22) auf einander gegenüberliegenden Seiten eines Stirnflansches (3) angeordnet sind und jeweils jede äußere Anschlußleitung (6 bzw. 7) in einem Leitungskanal (34 bzw. 35) zu dem mit dem Wicklungsanfang (21) bzw. mit dem Wicklungsende (22) verbundenen Kontaktende (41 bzw. 51) geführt und mit ihrem abisolierten Ende (61 bzw. 71) an dem entsprechenden Kontaktende (41 bzw. 51) fest angeschlossen ist.

2. Spulenkörper nach Anspruch 1,   d a d u r c h   g e - k e n n z e i c h n e t ,   daß die äußeren Anschlußleitungen (6 bzw. 7) in stirnseitig offene Leitungskanäle (36 bzw. 37) eingelegt und gehalten sind.

0097967

3. Spulenkörper nach Anspruch 1 oder 2, d a d u r c h g e k e n n z e i c h n e t , daß die äußeren Anschluß-leitungen (6 bzw. 7) im Sinne einer zugentlasteten Fixierung von einem radial über den übrigen Spulenkörper (3) überstehenden Kabeleinführungsschacht (38) abgewinkelt verlaufend in den übrigen Bereich der Leitungskanäle (34 bzw. 35) verlegt sind.

4. Spulenkörper nach einem der Ansprüche 1 bis 3, d a - d u r c h g e k e n n z e i c h n e t , daß die äußeren Anschlußleitungen (6 bzw. 7) in die ansonsten stirnseitig offenen Leitungskanälen (34 bzw. 35) eingedrückt und durch an dessen Seitenwände angeformte, die offene Seite zumindest teilweise überdeckende Nasen (39; 39) formschlüssig gehalten sind.

5. Spulenkörper nach einem der Ansprüche 1 bis 4, d a - d u r c h g e k e n n z e i c h n e t , daß die in die ansonsten stirnseitig offenen Leitungskanäle (34 bzw. 35) eingelegten äußeren Anschlußleitungen (6 bzw. 7) durch zumindest teilweise nachträgliches Verformen der Seitenwände der Leitungskanäle (34 bzw. 35), insbesondere im Bereich des Kabeleinführungsschachtes (38), formschlüssig gehalten sind.

6. Spulenkörper nach einem der Ansprüche 1 bis 5, d a d u r c h g e k e n n z e i c h n e t , daß jeweils ein abisoliertes Ende (61 bzw. 71) einer äußeren Anschlußleitung (6 bzw.7) in einem Klemmverschluß (511 bzw. 411) eines Kontaktendes (51 bzw. 41) festgeklemmt ist.

7. Spulenkörper nach einem der Ansprüche 1 bis 6,  d a -
d u r c h   g e k e n n z e i c h n e t ,   daß der
Wicklungsanfang (21) bzw. das Wicklungsende (22) der
Spule (2) sowie jedes abisolierte Ende (61 bzw. 71)
der Anschlußleitungen (6 bzw. 7) jeweils mit dem zugehörigen, aus der Stirnflanschebene vorstehenden Kontaktende (41 bzw. 51) gemeinsam verlötet ist.

8. Spulenkörper nach einem der Ansprüche 1 bis 7  in
einem umgebenden Statorgehäuse eines Synchron-Kleinmotors mit axial vorstehenden Statorpolen und mit zumindest einer, bestimmten Statorpolen zugeordneten stirnseitig angeordneten und länglich geformten Kurzschlußbrille,   d a d u r c h   g e k e n n z e i c h -
n e t ,   daß die Anschlußteile (4 bzw. 5) in dem
freien Raum zwischen den Längsseiten (12 bzw. 13) der
Kurzschlußbrille (11) und dem Außenrand des Spulenkörpers (3) angeordnet sind (Fig. 6).

9. Spulenkörper nach einem der Ansprüche 1 bis 8 in
einem umgebenden Statorgehäuse eines Synchron-Kleinmotors,   d a d u r c h   g e k e n n z e i c h -
n e t ,    daß in zumindest einen Stirnflansch (32)
des Spulenkörpers (3) stirnseitig federnde Lappen (37)
eingeformt sind, mittels derer der Spulenkörper (3)
zwischen den stirnseitigen Wandteilen des Statorgehäuses (8 bzw. 9) axial festspannbar ist.

10. Verfahren zur Herstellung eines Spulenkörpers nach einem der Ansprüche 1 bis 9, g e k e n n z e i c h - n e t durch folgende aufeinanderfolgende Verfahrensschritte:

a) Umwickeln des Wicklungsanfangs (21) der Spule (2) um das axial vorstehende Kontaktende (41) des Anschlußteils (4) durch entsprechende Bewegung der Wickeldüse der Wickelvorrichtung.

b) Schwenken der Wickeldüse in eine Stellung radial oberhalb des Spulenkörpers (3).

c) Bewickeln des Spulenkörpers (3) durch hochtouriges Rotieren des Spulenkörpers (3) unterhalb der stillstehenden Wickeldüse.

d) Zurückschwenken der Wickeldüse und Umwickeln des Wicklungsendes (22) der Spule (2) um das axial vorstehende Kontaktende (51) des Anschlußteils durch entsprechende Bewegung der Wickeldüse der Wickelvorrichtung und anschließendes Abtrennen des Wicklungsdrahtes.

e) Zumindest endseitiges Einlegen der äußeren Anschlußleitungen (6 bzw. 7) in die entsprechenden Leitungskanäle (34 bzw. 35) und Hinführen ihrer abisolierten freien Enden (61 bzw. 71) zu den axial vorstehenden Kontaktenden (41 bzw. 51) und ggf. Festklemmen.

f) Elektrisches Kontaktieren der abisolierten freien Enden (61 bzw. 71) mit den axial vorstehenden Kontaktenden (41 bzw. 51), insbesondere durch Eintauchen in ein Lötbad.

g) Umlegen der Kontaktenden (41 bzw. 51) in die Stirnflanschebene.

h) Gegebenenfalls noch notwendiges vollständiges Einlegen der äußeren Anschlußleitungen (6 bzw. 7) in die Leitungskanäle (34 bzw. 35) und zusätzliches Verstemmen im Bereich des Kabeleinführungssachtes (38).

i) Gegebenenfalls Anbringen einer die Anschlußteile (4 bzw. 5) abdeckenden Isolier-Klebefolie (14 bzw. 15).

0097967

82 P 3187

1/1

FIG 1

FIG 2

FIG 3

FIG 4

FIG 5

FIG 6